# EUROPÄISCHE PATENTSCHRIFT

(11) **EP 3 777 498 B1**
(45) Veröffentlichungstag und Bekanntmachung des Hinweises auf die Patenterteilung: **22.01.2025**
(21) Anmeldenummer: 20169746.3
(22) Anmeldetag: 16.04.2020
(51) Int. Cl.: A01B 71/02

(54) **LANDWIRTSCHAFTLICHES GESPANN MIT EINER ZUGMASCHINE UND EINEM PFLUG**
AGRICULTURAL IMPLEMENT WITH A TRACTOR AND A PLOUGH
ATTELAGE AGRICOLE DOTÉ D'UN TRACTEUR ET D'UNE CHARRUE

(30) Priorität: 16.08.2019 DE 102019122116
(43) Veröffentlichungstag der Anmeldung: 17.02.2021
(73) Patentinhaber: CLAAS Tractor S.A.S., 78141 Vélizy-Villacoublay Cedex (FR)
(72) Erfinder: Wieckhorst, Jan Carsten, 33104 Paderborn (DE); Ehlert, Christian, 33719 Bielefeld (DE); Birkmann, Christian, 33775 Versmold (DE); Heydekorn, Jens, 33428 Harsewinkel (DE); Pieper, Jona, 59394 Nordkirchen (DE)
(74) Vertreter: CLAAS 365FarmNet GmbH

(56) Entgegenhaltungen:
- EP-A1- 3 400 767
- EP-A1- 3 400 769
- EP-A1- 3 401 195
- EP-A1- 3 498 066
- DE-A1- 102016 118 205

## Beschreibung

Die Erfindung betrifft ein landwirtschaftliches Gespann mit einer Zugmaschine, insbesondere einem Traktor, und einem Pflug gemäß dem Oberbegriff von Anspruch 1 sowie ein Fahrerassistenzsystem zur Verwendung in dem landwirtschaftlichen Gespann nach Anspruch 16.

Durch eine optimierte Abstimmung zwischen der Zugmaschine und dem Pflug sowie der Zugmaschine und des Pflugs selbst, insbesondere mit Bezug auf das Pflügen, lassen sich hohe Effizienzgewinne und/oder Verbesserungen beispielsweise hinsichtlich der Arbeitsqualität erzielen. Auf Grund der hohen Komplexität der Zugmaschine und des Pflugs erfordert eine effiziente Einstellung jedoch ein hohes Maß an Fachwissen bei einem Bediener. Hinzu kommt noch, dass diverse Hersteller sowohl für Zugmaschinen als auch für Pflüge im Markt befindlich sind und die Geräte üblicherweise miteinander kombiniert werden können. Daher mangelt es jedoch an übergreifenden Optimierungssystemen, die bei einer Vielzahl unterschiedlicher Pflüge verwendbar sind.

An dieser Stelle setzen auch schon die bekannten landwirtschaftlichen Gespanne aus der EP 3 243 367 A2 und der EP 3 243 368 A2 an. Dort ist offenbart, dass die Zugmaschine und ein Anbaugerät, speziell ein Pflug, sich jeweils selbst optimieren und dass es für die gegenseitige Optimierung einen übergeordneten Prozess geben kann. Mit diesen landwirtschaftlichen Gespannen ist ein erster Schritt in Richtung einer effizienten Ansteuerung des gesamten Gespanns getan. Es ist jedoch so, dass nicht jeder Pflug vollständig automatisiert dazu in der Lage ist, sich selbst einzustellen. Vielmehr ist es häufig so, dass Pflüge manuell vom Bediener verstellt werden müssen. Bei manuellen Verstellungen sind dann jedoch eingestellte Maschinenparameter des Pflugs der Zugmaschine nicht bekannt, so dass diese die Maschinenparameter auch nicht bei der Optimierung berücksichtigen kann. Auch die Zugmaschine weist, zum Teil nur manuell verstellbare, Maschinenparameter auf, die wiederum den Pflug beeinflussen können.

Hinzu kommt, dass das landwirtschaftliche Gespann zu verschiedenen Zeitpunkten, an verschiedenen Orten oder bei verschiedenen Fortschritten der Abarbeitung eines landwirtschaftlichen Arbeitsprozesses unterschiedlich optimiert werden muss. Dabei beeinflussen die vergangenen Optimierungen zum Teil die zukünftigen Optimierungen, einige Einstellungen von Maschinenparametern der Zugmaschine und/oder des Pflugs müssen zu Beginn des landwirtschaftlichen Arbeitsprozesses vorgenommen werden und können nicht immer wieder angepasst werden und diverse Einstellungen müssen in einer bestimmten Reihenfolge vorgenommen werden. Weitere landwirtschaftliche Zugespanne sind den folgenden Publikcationen zu entnehmen: (= DE 10 2016 118205 A1), (= EP 3 400 767 A1), (= EP 3 401 195 A1), (= EP 3 400 769 A1) oder (= EP 3 498 066 A1)

Der Erfindung liegt das Problem zu Grunde, das bekannte landwirtschaftliche Gespann derart auszugestalten und weiterzubilden, dass die Optimierung des Gespanns bezüglich ihrer Flexibilität und Effizienz verbessert wird.

Das obige Problem wird bei einem landwirtschaftlichen Gespann gemäß dem Oberbegriff von Anspruch 1 durch die Merkmale des kennzeichnenden Teils von Anspruch 1 gelöst.

Wesentlich ist nun, dass die Optimierung des landwirtschaftlichen Gespanns keineswegs unabhängig von einem Bediener erfolgen sollte. Dieser Bediener kann dabei Strategievorgaben tätigen, gewisse Einstellungen, die gespannseitig vorgeschlagen werden, ablehnen oder akzeptieren oder einen Teil der durchzuführenden Einstellungen selbst vornehmen. Eine besonders hohe Effizienz ergibt sich daraus, dass die Optimierung in einem Dialog mit dem Bediener vorgenommen wird. Dieser Dialog umfasst dabei mehrere Dialogschritte, deren Optimierungen sich zum Teil wiederum gegenseitig beeinflussen. Hierfür weist die Zugmaschine ein Fahrerassistenzsystem auf, das einen Pflug-Einstell-Assistenten zur Ermittlung und Einstellung optimierter Maschinenparameter des Pflugs umfasst.

Im Einzelnen wird vorgeschlagen, dass der Pflug-Einstell-Assistent in einem Dialog mit einem Bediener in mehreren Dialogschritten jeweils einzustellende optimierte Maschinenparameter des Pflug und/oder der Zugmaschine ermittelt, dass der Pflug-Einstell-Assistent einen Teil der in einem ersten Dialogschritt ermittelten optimierten Maschinenparameter des Pflugs und/oder der Zugmaschine automatisch einstellt und/oder einen Teil der in dem ersten Dialogschritt ermittelten optimierten Maschinenparameter dem Bediener zur Einstellung am Pflug und/oder der Zugmaschine vorgibt und dass der Pflug-Einstell-Assistent auf Basis der in dem ersten Dialogschritt ermittelten optimierten Maschinenparameter oder auf Basis von vom Bediener in dem ersten Dialogschritt eingegebenen tatsächlich eingestellten Maschinenparametern weitere optimierte Maschinenparameter des Pflugs ermittelt und diese in einem zweiten Dialogschritt dem Bediener zur Einstellung am Pflug vorgibt und/oder automatisch am Pflug einstellt. Somit werden die optimierten Maschinenparameter des Pflugs anhand der optimierten Maschinenparameter des ersten Dialogschritts im zweiten Dialogschritt ermittelt.

Eine besondere Bedeutung kommt hier der Ausgestaltung gemäß Anspruch 2 zu, nach der der Pflug-Einstell-Assistent dem Bediener im ersten Dialogschritt einzustellende optimierte Maschinenparameter zur Einstellung vorgibt. Da viele Pflüge aktuell nicht vollautomatisiert einstellbar sind und auch viele Bediener nicht zusätzlich zu einem neuen Fahrerassistenzsystem oder einer neuen Zugmaschine noch einen neuen Pflug kaufen wollen, kommt dem Fall des nicht vollautomatisiert einstellbaren Pflugs eine hohe Bedeutung zu.

Damit die Optimierung eines zumindest zum Teil nur manuell einstellbaren Pflugs dennoch effizient ist, gibt der Pflug-Einstell-Assistent bei der Erwähnten Ausgestaltung gemäß Anspruch 2 dem Bediener die einzustellenden optimierten Maschinenparameter vor, die dieser manuell am Pflug einstellen kann. Der Bediener kann diese Maschinenparameter dann so einstellen, oder eine andere Einstellung wählen. Essentiell ist dabei, dass der Bediener die tatsächliche Einstellung zurückmeldet, wenn diese von der vorgegebenen Einstellung abweicht. Somit wird es dem Pflug-Einstell-Assistenten ermöglicht, im zweiten Dialogschritt die tatsächlichen Maschinenparameter bei der Optimierung zu berücksichtigen, obwohl diese nicht automatisch eingestellt wurden.

Zwei der wichtigsten einzustellenden Maschinenparameter des Pflugs sind die Vorderfurchenbreite und die Arbeitstiefe. Entsprechend werden bei der Ausgestaltung gemäß Anspruch 3 zumindest diese beiden Maschinenparameter automatisch eingestellt. In einer weiter bevorzugten Ausführungsform passt der Pflug-Einstell-Assistent die Parameter während einer Bearbeitung des Feldes automatisch an, wobei er sie insbesondere nachführt, wenn sie durch Änderungen im Feldbestand, Feldboden oder ähnliches nicht mehr aktuell sind.

Die Ausgestaltungen gemäß Anspruch 4 betreffen einen Dialogschritt "Bodeneigenschaften" und einen Dialogschritt "Fahrt". Der Dialogschritt "Bodeneigenschaften" ist insofern atypisch, dass er vorzugsweise nicht direkt der Einstellung von Maschinenparametern dient, sondern der Erfassung vorgelagerter Informationen, die gleichwohl für die effiziente Einstellung diverser Maschinenparameter wichtig sein können. Auch der Dialogschritt "Fahrt" dient vorzugsweise nicht direkt der Einstellung von Maschinenparametern, die mit der Bearbeitung eines Feldes in Verbindung stehen, sondern einen Transport des Pflugs betreffende Maschinenparameter.

Bevor nun weitere der möglichen Dialogschritte erläutert werden, darf darauf hingewiesen werden, dass die Dialogschritte auf diverse Arten verwirklicht werden können. So kann ein Dialogschritt mehrere Dialogschritte umfassen, zwischen den einzelnen Dialogschritten eines Dialogschritts können andere Dialogschritte abgearbeitet werden und einige Dialogschritte können auch mehrfach abgearbeitet werden, wenn dies erforderlich ist.

Die Ausgestaltung gemäß Anspruch 5 betrifft einen Dialogschritt "Pfluganbauten", der Maschinenparameter in Form von Pfluganbauten betrifft. Solche Pfluganbauten können beispielsweise Düngereinleger, Seche, Rundseche, Untergrundlockerer oder Kompaktierer sein. Dabei ist die Kenntnis des Pflug-Einstell-Assistenten der Pfluganbauten besonders wichtig, während das automatische Hinzufügen oder Entfernen von Pfluganbauten mittels des Pflug-Einstell-Assistenten fast unmöglich ist. Daher zeigt dieser Dialogschritt auf einfache Art und Weise die Vorteile des Zusammenspiels zwischen Pflug-Einstell-Assistenten und Bediener auf.

Anspruch 6 betrifft einen Dialogschritt "Ballastierung". Dieser betrifft vorzugsweise eine Ballastierung der Vorderachse und/oder der Hinterachse der Zugmaschine. Diese hat einen starken Einfluss auf das Ergebnis des Pflügens, muss üblicherweise schon vor Beginn des Pflügens eingestellt werden und wird gleichzeitig von anderen Parametern, insbesondere den Eigenschaften des Feldes, beeinflusst. Auch hier zeigen sich daher die Vorteile der vorschlagsgemäßen Dialogschritte.

Bei der Ausgestaltung gemäß Anspruch 7 ist ein Dialogschritt "Bereifung" vorgesehen. Eine vorausschauende Planung der Bereifung, insbesondere unter Hinzuziehung der Eigenschaften des Feldes, wie einer Bodenfeuchte oder einer zu erwartenden zukünftigen Bodenfeuchte, kann die Effizienz des gesamten landwirtschaftlichen Arbeitsprozesses verbessern.

Durch den bei der Ausgestaltung gemäß Anspruch 8 vorgesehenen Dialogschritt "Pflügart" kann der Bediener Parameter des geplanten Pflügens eingeben, die sich wiederum auf die Maschinenparameter des Pflugs auswirken können.

Die Ausgestaltung gemäß Anspruch 9 betrifft einen Dialogschritt "Vorbereitung", der vorzugsweise eine Kopplung des Pfluges mit der Zugmaschine und Vorbereitungen auf ein Einfahren in das Feld umfasst.

Meist kurz vor Einfahrt in das Feld kann dann der bei der Ausgestaltung gemäß Anspruch 10 vorgesehene Dialogschritt "Pflugausrichtung" abgearbeitet werden, in dem eine Arbeitstiefe und/oder eine Arbeitsweite des Pflugs optimiert werden können.

Zumeist nach dem Pflügen einer ersten Bahn des Feldes kann bei der Ausgestaltung gemäß Anspruch 11 mit dem Dialogschritt "Vorderfurchenbreite" insbesondere die Vorderfurchenbreite des Pflugs optimal eingestellt werden.

Zumeist zeitlich zwischen, kurz nach oder kurz vor den Dialogschritten "Pflugausrichtung" und "Vorderfurchenbreite" kann der Dialogschritt "Zugpunkteinstellung" gemäß Anspruch 12 vorgesehen sein. Eine korrekte Zugpunkteinstellung stellt den Zugpunkt des Pflugs so ein, dass möglichst energiesparend ohne Seitenzug gepflügt werden kann.

Der gemäß der Ausgestaltung nach Anspruch 13 vorgesehene Dialogschritt "Sech" betrifft vor allem Einstellungen eines Sechs und/oder eines Rundsechs und/oder verwandter Pfluganbauten. Auch diese Einstellungen sind für ein optimales Ergebnis des Pflügens von Bedeutung.

Bei der Ausgestaltung gemäß Anspruch 14 arbeitet der Pflugeinstellassistent eine mehrstufige Optimierungsstrategie ab. Die mehrstufige Optimierungsstrategie umfasst mehrere Stufen, die unterschiedliche Fortschritte des landwirtschaftlichen Arbeitsprozesses betreffen.

Anspruch 15 schließlich gibt bevorzugte Zuordnungen der Dialogschritte zu den jeweiligen Stufen an.

Nach einer weiteren Lehre gemäß Anspruch 16, der eigenständige Bedeutung zukommt, wird ein Fahrerassistenzsystem zur Verwendung in dem vorschlagsgemäßen landwirtschaftlichen Gespann beansprucht. Auf alle Ausführungen zu dem landwirtschaftlichen Gespann darf verwiesen werden.

Im Folgenden wird die Erfindung anhand einer lediglich ein Ausführungsbeispiel darstellenden Zeichnung näher erläutert. In der Zeichnung zeigt:
- Fig. 1: ein vorschlagsgemäßes landwirtschaftliches Gespann mit einer Zugmaschine, hier einem Traktor, und einem Pflug und
- Fig. 2: in a), b) und c) eine Zugmaschine mit einem Pflug und dessen wichtigsten Pfluganbauten in verschiedenen Ansichten.

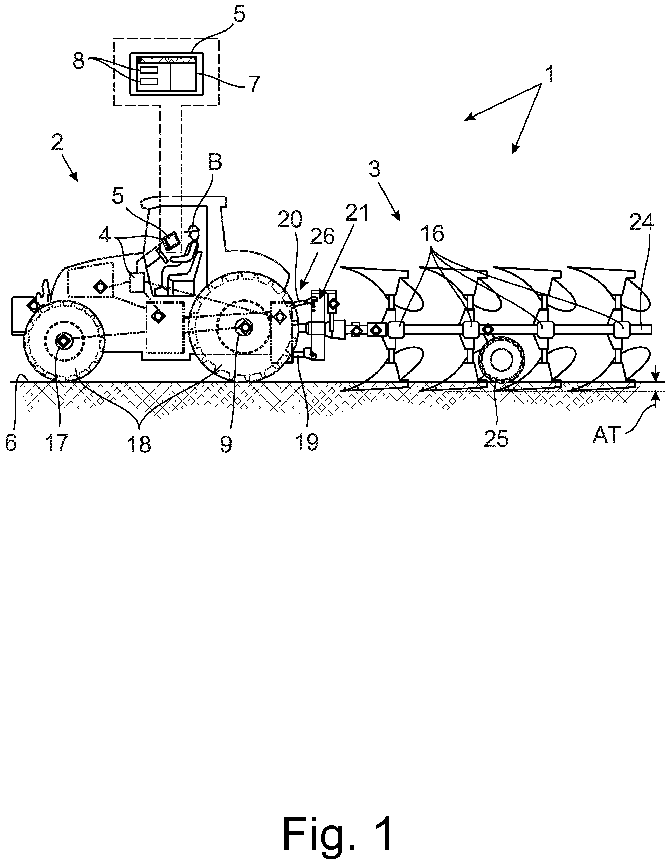

Fig. 1 zeigt ein vorschlagsgemäßes landwirtschaftliches Gespann 1 mit einer Zugmaschine 2, hier als Traktor ausgestaltet, und einem Pflug 3. Die Zugmaschine 2 weist ein Fahrerassistenzsystem 4 auf. Das Fahrerassistenzsystem 4 wiederum umfasst eine Ein-Ausgabeeinheit 5. Die Ein-Ausgabeeinheit 5 dient dabei einer Interaktion mit einem Bediener B.

Das landwirtschaftliche Gespann 1 wird im Rahmen eines landwirtschaftlichen Arbeitsprozesses zur Bearbeitung eines Feldes 6 eingesetzt. Zur Optimierung der Bearbeitung des Feldes 6 ist der Pflug 3 und hier und vorzugsweise die Zugmaschine 2 mit Maschinenparametern einstellbar. Bei den Maschinenparametern kann es sich um eine Vielzahl an einstellbaren Parametern handeln, die im Folgenden noch thematisiert werden. Auch die Zugmaschine 2 ist hier und vorzugsweise mit Maschinenparametern einstellbar. Bei den Maschinenparametern kann es sich grundsätzlich um Maschinenparameter aller Abstraktionsebenen handeln. Es ist auch möglich, dass ein Maschinenparameter einer höheren Abstraktionsebene wiederum einen Einfluss auf einen anderen Maschinenparameter einer niedrigeren Abstraktionsebene hat. Der Begriff "Maschinenparameter" ist insofern weit auszulegen, wobei jedoch hervorzuheben ist, dass es sich bei den Maschinenparametern um direkt einstellbare Parameter handelt, die für sich genommen eindeutig einstellbar sind, wenn auch zum Teil nur werks- oder produktionsseitig. Eine Strategie wie beispielsweise "Diesel sparen" ist somit kein Maschinenparameter. Wo nicht anders angegeben bezieht sich der Begriff Maschinenparameter immer auf die Maschinenparameter der Zugmaschine 2 und/oder des Pflugs 3, die zur optimierten Bearbeitung des Feldes 6 meist zusammengehörend betrachtet werden.

Ein Teil der Maschinenparameter des Pflugs 3 ist manuell und/oder automatisch mittels der Zugmaschine 2 einstellbar. Zur Ermittlung und Einstellung optimierter Maschinenparameter des Pflugs 3 umfasst das Fahrerassistenzsystem 4 einen Pflug-Einstell-Assistenten 7. Dieser Pflug-Einstell-Assistent 7 ist vorzugsweise ein auf dem Fahrerassistenzsystem 4 laufendes Softwareprogramm. Das Fahrerassistenzsystem 4 umfasst dabei vorzugsweise Hardware der Zugmaschine 2. Genauso vorteilhaft ist jedoch denkbar, dass das Fahrerassistenzsystem 4 ein mobiles Gerät ist oder umfasst. Der Begriff "optimiert" meint dabei eine Optimierung ganz allgemein hinsichtlich des landwirtschaftlichen Arbeitsprozesses, insbesondere der Bearbeitung des Feldes 6. Dabei kann eine Optimierung beispielsweise eine Reduktion eines Diesel-Verbrauchs der Zugmaschine 2 oder eine verbesserte Arbeitsweise des Pflugs 3, zum Beispiel eine verbesserte Durchmengung des Feldes 6 mit Dünger oder eine ebenere Feldoberfläche sein.

Vorschlagsgemäß ist es nun so, dass der Pflug-Einstell-Assistent 7 in einem Dialog mit einem Bediener B in mehreren Dialogschritten 8 jeweils einzustellende optimierte Maschinenparameter des Pflugs 3 und/oder der Zugmaschine 2 ermittelt. Diese einzustellenden optimierten Maschinenparameter können hinsichtlich diverser Zielvorgaben optimiert sein. Üblicherweise wird eine übergeordnete Zielvorgabe dieser Optimierung allerdings die Optimierung der Bearbeitung des Feldes 6 sein.

Es kann vorgesehen sein, dass der Pflug-Einstell-Assistent 7 einen Teil der in einem ersten Dialogschritt ermittelten optimierten Maschinenparameter automatisch am Pflug 3 und/oder der Zugmaschine 2 einstellt. Zusätzlich oder alternativ ist vorgesehen, dass der Pflug-Einstell-Assistent 7 einen Teil der in dem ersten Dialogschritt ermittelten optimierten Maschinenparameter dem Bediener B zur Einstellung am Pflug 3 und/oder der Zugmaschine 2 vorgibt. Sofern einige oder sogar alle optimierten Maschinenparameter dem Bediener B zur Einstellung am Pflug 3 und/oder der Zugmaschine 2 vorgegeben werden, ist gewährleistet, dass mittels des Pflug-Einstell-Assistenten 7 auch solche Maschinenparameter optimiert werden können, die nicht automatisch einstellbar sind. Damit, dass die ermittelten optimierten Maschinenparameter dem Bediener B zur Einstellung vorgegeben werden, ist immer gemeint, dass der Bediener B diese Maschinenparameter manuell verstellen soll. Es ist jedoch nicht notwendigerweise so, dass der Bediener B diese Maschinenparameter auch tatsächlich so wie vorgegeben oder gar überhaupt verstellt. Der Bediener B kann die Vorgaben insofern akzeptieren oder ablehnen oder abändern und andere Maschinenparameter einstellen. Es ist dann jedoch für die uneingeschränkte Funktion des Pflug-Einstell-Assistenten 7 essentiell, dass der Bediener B dem Pflug-Einstell-Assistenten 7 mittels der Ein-Ausgabeeinheit 5 eine Rückmeldung über die tatsächlich eingestellten Maschinenparameter gibt.

Vorschlagsgemäß ermittelt der Pflug-Einstell-Assistent 7 auf Basis der in dem ersten Dialogschritt ermittelten optimierten Maschinenparameter oder auf Basis der vom Bediener B im ersten Dialogschritt eingegebenen tatsächlich eingestellten Maschinenparametern weitere optimierte Maschinenparameter des Pflugs 3. Diese gibt der Pflug-Einstell-Assistent 7 in einem zweiten Dialogschritt dem Bediener B zur Einstellung am Pflug 3 vor und/oder stellt sie automatisch am Pflug 3 ein. Die Begriffe "erster Dialogschritt" und "zweiter Dialogschritt" sind dabei bezüglich weiterer Dialogschritte in dem Dialog nicht einschränkend zu verstehen. Es können weiter Dialogschritte vor und/oder zwischen und/oder nach dem ersten und dem zweiten Dialogschritt vorgesehen sein.

Die Ermittlung der optimierten Maschinenparameter in den Dialogschritten 8 erfolgt hier und vorzugsweise basierend auf Vorgaben des Bedieners B, insbesondere Strategien wie "Effizienz" oder "Diesel sparen" als Zielvorgaben der Optimierung. Der Dialog kann mittels der Ein-Ausgabeeinheit 5 in Kommunikation mit dem Bediener B abgearbeitet werden.

Die Dialogschritte 8 können örtlich und/oder zeitlich voneinander verschiedene Fortschritte im landwirtschaftlichen Arbeitsprozess betreffen. Dabei beginnt die Optimierung des landwirtschaftlichen Gespanns 1 schon vor der Bearbeitung des Feldes 6, geschieht aber insgesamt hinsichtlich der Bearbeitung des Feldes 6.

Besonders hervorzuheben ist, dass hier und vorzugsweise der Pflug-Einstell-Assistent 7 mittels des Dialogs mit dem Bediener B in dem ersten Dialogschritt dem Bediener B einzustellende optimierte Maschinenparameter zur Einstellung vorgibt. Diese Ausführungsform hebt die Vorteile des vorschlagsgemäßen landwirtschaftlichen Gespanns 1 besonders hervor, da so auch landwirtschaftliche Gespanne 1 mit Pflügen 3 optimiert werden können, an denen nicht alle Maschinenparameter des Pflugs 3 automatisch mittels des Pflug-Einstell-Assistenten 7 eingestellt werden können. Es kann vorgesehen sein, dass nach der Vorgabe der einzustellenden optimierten Maschinenparameter im ersten Dialogschritt im zweiten Dialogschritt die weiteren optimierten Maschinenparameter automatisch am Pflug 3 eingestellt werden.

Von herausragender Wichtigkeit unter den einstellbaren Maschinenparametern eines Pflugs 3 sind eine Arbeitstiefe AT und eine Vorderfurchenbreite VB des Pflugs 3. Es ist daher hier und vorzugsweise so, dass der Pflug-Einstell-Assistent 7 die Vorderfurchenbreite VB und die Arbeitstiefe AT des Pflugs 3 automatisch am Pflug 3 einstellt. Dies geschieht vorzugsweise während des zweiten Dialogschritts. Besonders bevorzugt ist, dass der Pflug-Einstell-Assistent 7 die Vorderfurchenbreite VB und die Arbeitstiefe AT des Pflugs 3 während der Bearbeitung des Feldes 6 automatisch anpasst. Diese automatische Anpassung ist insbesondere eine Regelung, die die Vorderfurchenbreite VB und die Arbeitstiefe AT des Pflugs 3 möglichst konstant halten soll. Da bei herkömmlichen Pflügen 3 eine derartige automatische Einstellung jedoch üblicherweise nicht möglich ist, kann genauso vorteilhaft vorgesehen sein, dass der Pflug-Einstell-Assistent 7 dem Bediener B Hilfestellungen und/oder optimierte Maschinenparameter zur Einstellung am Pflug 3 vorgibt, mittels derer der Bediener B die Arbeitstiefe AT und/oder die Vorderfurchenbreite VB optimiert einstellen kann.

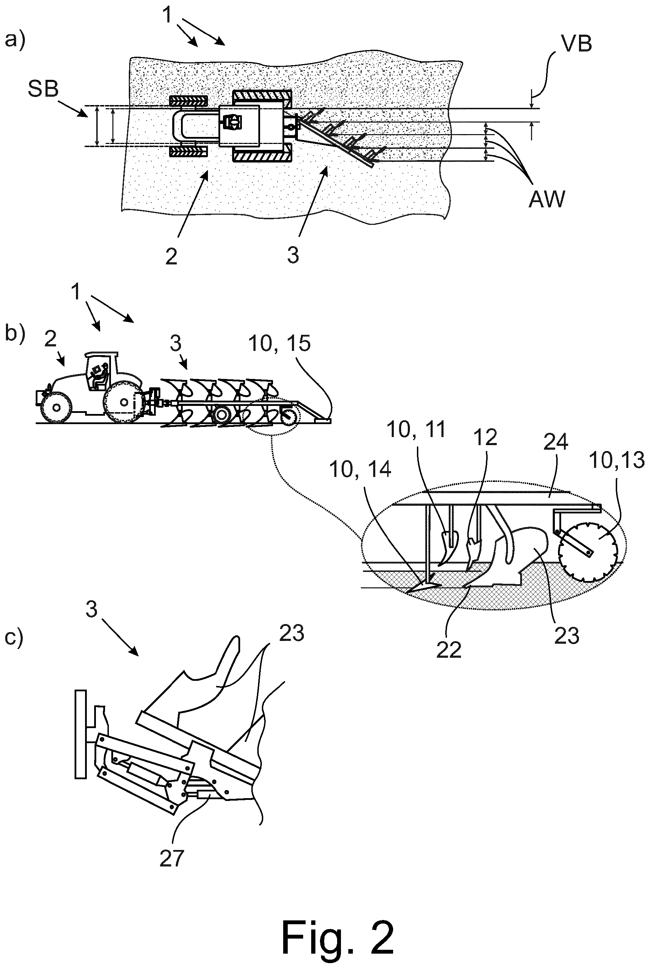

Im Folgenden sollen anhand der in Fig. 2 in verschiedenen Ansichten dargestellten Bauteile eines Pflugs 3 die verschiedenen bevorzugten Dialogschritte 8 des Dialogs des Pflug-Einstell-Assistenten 7 mit dem Bediener B erläutert werden. Dabei darf schon hier darauf hingewiesen werden, dass der Begriff "Dialogschritte" weit auszulegen ist. Ein Dialogschritt 8, der mehrere Eingaben oder Vorgaben umfasst, kann beispielsweise auch in mehrere Dialogschritte 8 gegliedert sein. Zwischen diesen Dialogschritten 8 können andere Dialogschritte 8 abgearbeitet werden. Auch die Reihenfolge der Dialogschritte 8 ist prinzipiell beliebig. Da allerdings viele der Dialogschritte 8 Informationen aus anderen Dialogschritten 8 verwenden können, ist es dann so, dass der andere Dialogschritt 8 vorzugsweise, sofern er denn vorgesehen ist, vorher abgearbeitet wird. Die bevorzugte Reihenfolge der Dialogschritte 8 ergibt sich somit aus den jeweils benötigten Informationen. Dabei ist jedoch nicht ausgeschlossen, dass die Informationen auch aus einer anderen Quelle als einem Dialogschritt 8 bezogen werden. Diese Informationen werden zwar in dem Dialogschritt, also während dieser abgearbeitet wird, jedoch nicht durch die Abarbeitung des Dialogschritts erhalten.

Der Dialog des Pflug-Einstell-Assistenten 7 kann einen Dialogschritt "Bodeneigenschaften" umfassen, in dem der Bediener B Eigenschaften des Feldes 6 eingibt und/oder in dem Eigenschaften des Feldes 6 automatisch erkannt werden. Bei diesen Eigenschaften des Feldes 6 kann es sich um Kartierungsdaten einer Schlagkartei, prognostizierte Wetterdaten am Ort des Feldes 6, eine Bodenfeuchtigkeit und dergleichen mehr handeln. Dabei können die Eigenschaften des Feldes, und auch ganz allgemein Maschinenparameter in den anderen Dialogschritten, nicht nur durch Eingaben des Bedieners, sondern auch aus externen Quellen ermittelt werden. Hier kann vorgesehen sein, dass in dem Dialogschritt "Bodeneigenschaften" die Kartierungsdaten der Schlagkartei und/oder die Wetterdaten automatisch ausgewertet werden, um die Eigenschaften des Feldes 6 zu erkennen.

Es kann vorgesehen sein, dass der Dialog des Pflug-Einstell-Assistenten 7 einen Dialogschritt "Fahrt" umfasst, in dem der Bediener B eine Straßenfahrt und/oder eine Feldbearbeitung als Parameter auswählen kann. Sodann stellt der Pflug-Einstell-Assistent 7 straßenfahrtspezifische und/oder feldbearbeitungsspezifische Maschinenparameter automatisch am Pflug 3 ein und/oder gibt sie dem Bediener B zur Einstellung vor. Daher handelt es sich bei der "Straßenfahrt" und der "Feldbearbeitung" nicht um Maschinenparameter sondern um allgemeinere Parameter. Derartige allgemeinere Parameter sind jedoch äquivalent zu den Maschinenparametern von den weiteren Dialogschritten verwendbar, sodass alle Ausführungen zu Maschinenparametern, bis auf die direkte Einstellbarkeit, auch auf anderweitige allgemeinere Parameter anwendbar sind.

Bei den straßenfahrtspezifischen Maschinenparametern kann es sich zum Beispiel um eine Arretierung einer Transportstellung bei einem Aufsattelpflug handeln, da dieser bei einer Straßenfahrt den Boden nicht bearbeiten soll. Diese Einstellung sollte dann bei der Feldbearbeitung reversiert werden. Als weiterer straßenfahrtspezifischer Maschinenparameter kommt zum Beispiel die Aktivierung einer Sperre des Absenkens des Pflugs 3 in Frage. Der Pflug-Einstell-Assistent 7 kann in dem Dialogschritt "Fahrt" auch Maschinenparameter der Zugmaschine 2 einstellen. Die straßenfahrtspezifischen und die feldbearbeitungsspezifische können in dem Fahrerassistenzsystem werkseitig hinterlegt worden sein, pflugspezifisch von einem Server empfangen worden sein oder vom Bediener eingegeben, insbesondere einmalig hinterlegt, werden.

Der Dialog des Pflug-Einstell-Assistenten 7 kann einen Dialogschritt "Pfluganbauten" umfassen, in dem dem Bediener B als Maschinenparameter optimierte Pfluganbauten 10 für den Pflug 3 vorgegeben werden und/oder der Bediener B als Maschinenparameter angebaute Pfluganbauten 10 eingeben kann. Bei solchen Pfluganbauten 10 handelt es sich vorzugsweise um Düngereinleger 11 und/oder Seche 12 und/oder Rundseche 13 und/oder Untergrundlockerer 14 und/oder Kompaktierer 15. Hier und vorzugsweise werden in dem Dialogschritt "Pfluganbauten" die optimierten Pfluganbauten 10 für den Pflug 3 auf Basis der in dem Dialogschritt "Bodeneigenschaften" eingegebenen und/oder automatisch erkannten Eigenschaften des Feldes 6 ermittelt. Beispielsweise kann die Notwendigkeit eines Untergrundlockerers 14 anhand von Daten über die Festigkeit des Untergrunds bewertet werden.

Aus den in dem Dialogschritt "Bodeneigenschaften" ermittelten Feldeigenschaften und/oder den in dem Dialogschritt "Pfluganbauten" ermittelten und/oder vorgegebenen Maschinenparametern werden hier und vorzugsweise optimierte Maschinenparameter einer hydraulischen Überlastsicherung 16 ermittelt. Diese Ermittlung ist hier und vorzugsweise auch Teil des Dialogschritts "Pfluganbauten" und wird entsprechend dem Bediener B zur Einstellung vorgegeben oder automatisch eingestellt.

Der Dialog des Pflug-Einstell-Assistenten 7 kann einen Dialogschritt "Ballastierung" umfassen, in dem dem Bediener B als Maschinenparamater optimierte Ballastierungen für die Vorderachse 17 und/oder die Hinterachse 9 der Zugmaschine 2 vorgegeben werden und/oder der Bediener B als Maschinenparameter Ballastierungen für die Vorderachse 17 und/oder die Hinterachse 9 der Zugmaschine 2 und/oder die Nutzung einer Hinterachsenballastierung eingeben kann. Da der Pflug 3 beim Pflügen des Feldes 6 als Hebel, üblicherweise von hinten, auf die Zugmaschine 2 wirkt, kann diesem Hebel mit einer Ballastierung der Vorderachse 17 entgegengewirkt werden. Je nach Ausgestaltung des landwirtschaftlichen Gespanns 1, insbesondere der Zugmaschine 2, kann jedoch auch eine Mindestachslasterhöhung der Hinterachse 9 notwendig sein, die ebenfalls zu beachten ist. Dementsprechend werden die optimierten Ballastierungen vorzugsweise auf der eingegebenen Nutzung der Hinterachsenballastierung und/oder den in dem Dialogschritt "Bodeneigenschaften" eingegebenen und/oder automatisch erkannten Eigenschaften des Feldes 6 und/oder einem Ziel des Pflügens ermittelt. So kann die Ballastierung zum Beispiel von der Bodenfeuchte abhängig sein. Zusätzlich oder alternativ kann die optimierte Ballastierung basierend auf den in dem Dialogschritt "Pfluganbauten" eingegebenen und/oder vorgegebenen Maschinenparametern ermittelt werden. So ist zum Beispiel die Ballastierung bei einem Pflug 3 mit Kompaktierer 15 anders, als bei einem Pflug 3 ohne Kompaktierer 15. Das Ziel des Pflügens kann beispielsweise das Herstellen eines Saatbeets sein.

Der Dialog des Pflug-Einstell-Assistenten 7 kann einen Dialogschritt "Bereifung" umfassen, in dem dem Bediener B als Maschinenparameter optimierte Reifenparameter, insbesondere ein Reifendruck, vorgegeben werden und/oder der Bediener B als Maschinenparameter Reifenparameter eingeben kann.

Der Dialogschritt "Bereifung" ist hier und vorzugsweise in einen Dialogschritt "Reifenart" und einen Dialogschritt "Reifendruck" unterteilt. Dabei umfasst der Dialogschritt "Reifenart" eine Art der Reifen 18 der Zugmaschine 2, beispielsweise eine Profiltiefe, und der Dialogschritt "Reifendruck" betrifft den Druck der Reifen 18. Während die Art der Reifen 18 üblicherweise für einen landwirtschaftlichen Arbeitsprozess nur einmalig eingestellt wird, kann es vorgesehen sein, dass der Reifendruck mehrmals, beispielsweise vor einer Straßenfahrt und vor Beginn der Bearbeitung des Feldes 6, geändert wird.

Die optimierten Reifenparameter werden vorzugsweise basierend auf den in dem Dialogschritt "Bodeneigenschaften" eingegebenen und/oder automatisch erkannten Eigenschaften des Feldes 6 und/oder den in dem Dialogschritt "Ballastierung" eingegebenen und/oder vorgegebenen Maschinenparameter ermittelt. Zusätzlich oder alternativ kann vorgesehen sein, dass die optimierten Maschinenparameter in dem Dialogschritt "Ballastierung" basierend auf den optimierten oder eingegebenen Maschinenparametern des Dialogschritts "Bereifung" ermittelt werden. So wird vorzugsweise erst die Art der Reifen 18 eingegeben, dann die optimierten Ballastierungen ermittelt und dann der optimierte Reifendruck.

Der Dialog des Pflug-Einstell-Assistenten 7 kann einen Dialogschritt "Pflügart" umfassen, in dem der Bediener B Parameter des geplanten Pflügens eingeben kann. Vorzugsweise umfassen die eingebbaren Parameter des geplanten Pflügens, ob das Pflügen onland oder offland durchgeführt wird und/oder ob ein Kompaktierer 15 verwendet wird und/oder ob eine Saatfurche oder einer Winterfurche gepflügt wird. Sofern die Information, ob ein Kompaktierer 15 verwendet wird, bereits bekannt ist, kann sie hier zu Kontrollzwecken erneut angezeigt werden.

Beim Onland-Pflügen fährt die Zugmaschine 2 vollständig im ungepflügten Land, während beim Offland-Pflügen eine Seite der Zugmaschine 2 in einer bereits gepflügten Furche fährt. Entsprechend hat dieser Parameter großen Einfluss auf die meisten Maschinenparameter.

Der Dialog des Pflug-Einstell-Assistenten 7 kann einen Dialogschritt "Vorbereitung" umfassen, in dem dem Bediener B als Maschinenparameter ein optimaler Achsabstand, insbesondere die Spurbreite SB der Hinterachse 9, vorgegeben wird und/oder der Bediener B als Maschinenparameter einen Achsabstand eingeben kann. Zusätzlich oder alternativ können dem Bediener B optimierte Maschinenparameter für Unterlenker 19 und/oder für Oberlenker 20 vorgegeben werden und/oder der Bediener B Maschinenparameter der Unterlenker 19 und oder der Oberlenker 20 eingeben kann. Vorzugsweise wird als optimierter Achsabstand zumindest vorgegeben, dass der Achsabstand der Vorderachse 17 und der Hinterachse 9 um maximal 10 cm voneinander abweichen. Unter dem Achsabstand ist hierbei der Abstand zwischen den inneren Reifenkanten der jeweiligen Achse zu verstehen.

Hier und vorzugsweise werden Einstellungen der Unterlenker 19 und/oder die Oberlenker 20 von dem Pflug-Einstell-Assistenten 7 dem Bediener zur Einstellung vorgegeben. Alternativ können die Unterlenker 19 und/oder die Oberlenker 20 von dem Pflug-Einstell-Assistenten 7 automatisch oder teilautomatisch auf die in dem Dialogschritt "Vorbereitung" ermittelten optimierten Maschinenparameter eingestellt werden. Zusätzlich oder alternativ werden die optimierten Maschinenparameter des Dialogschritts "Vorbereitung" basierend auf den eingegebenen Parametern des Dialogschritts "Pflügart" ermittelt.

Vorzugsweise umfassen die Maschinenparameter für die Oberlenker 20 eine Ausrichtung der Oberlenker 20, eine Höheneinstellung des Angriffspunkts der Oberlenker 20 an der Schienenwelle 21, das als Angriffspunkt zu nutzende Loch der Schienenwelle 21 und/oder eine Längeneinstellung der Oberlenker 20. Bei der Längeneinstellung der Oberlenker 20 wird vorzugsweise vorgegeben, dass diese auf Zug beansprucht werden sollen. Auch die Einstellungen der Unterlenker 19 umfassen vorzugsweise zumindest die Ausrichtung der Unterlenker 19.

Vorzugsweise wird dem Bediener B in dem Dialogschritt "Vorbereitung" als Maschinenparameter vorgegeben, dass die Oberlenker 20 in ein Langloch der Schienenwelle 21 eingreifen sollen, sofern aus dem Dialogschritt "Bodeneigenschaften" bekannt ist, dass das Feld 6 hügelig ist. Die optimierten Maschinenparameter der Unterlenker 19 und/oder der Oberlenker 20 sind hier und vorzugsweise abhängig davon, ob ein Onland- oder ein Offland-Pflügen in dem Dialogschritt "Pflügart" eingegeben wurde. In dem Dialogschritt "Vorbereitung" kann dem Bediener B auch als Maschinenparameter vorgegeben werden, dass eine Hydraulik der Zugmaschine 2 auf Positions-, Misch- oder Zugkraft gestellt werden sollte.

Der Dialog des Pflug-Einstell-Assistenten 7 kann einen Dialogschritt "Pflugausrichtung" umfassen, in dem dem Bediener B als Maschinenparameter eine optimierte Arbeitstiefe AT und/oder eine optimierte Arbeitsweite AW vorgegeben werden und/oder in dem der Bediener B als Maschinenparameter eine Arbeitstiefe AT und/oder eine Arbeitsweise AW eingeben kann. Bei der Arbeitstiefe AT handelt es sich um die Tiefe des Eindringens einer Scharspitze 22 und bei der Arbeitsweite AW um den Abstand der Scharen 23 voneinander quer zur Richtung des Pflügens. Vorzugsweise werden in dem Dialogschritt "Pflugausrichtung" dem Bediener B optimierte Maschinenparameter des Pflugs 3, insbesondere ein Neigungswinkel des Pflugs 3 und ein Anlenkpunkt für die Oberlenker 20, und vorzugsweise Einstellhilfen zur optimierten Einstellung der Einstellungen des Pflugs 3, insbesondere jeweils zu verstellende Stellglieder, vorgegeben, die vorzugsweise basierend auf den im Dialogschritt "Pflugausrichtung" eingegebenen und/oder vorgegebenen Maschinenparametern ermittelt wurden.

Bei den angesprochenen zu verstellenden Stellgliedern kann es sich hier zum Beispiel um die Oberlenkerlänge handeln, mittels derer eine Kinematik des Pflugs 3 beeinflusst werden kann. Ganz allgemein sollten die Stellglieder dabei so eingestellt werden, dass ein Neigungswinkel eines Pflugbaums 24 so eingestellt wird, dass der Pflugbaum 24 parallel zum Boden ist. Die Arbeitstiefe AT sollte abhängig von den Eigenschaften des Feldes 6, insbesondere der Bodenfeuchte, und/oder einer Bodenart und/oder einem Ziel der Feldbearbeitung gewählt werden, sodass sie vorzugsweise abhängig von den Eigenschaften des Feldes 6 von dem Pflug-Einstell-Assistenten 7 ermittelt wird. Zur Einstellung der Arbeitstiefe AT dienen die Maschinenparameter der Traktorhydraulik und die Maschinenparameter eines Stützrads 25 des Pflugs 3, die vorzugsweise automatisch eingestellt und/oder dem Bediener B zur Einstellung vorgegeben werden. Weitere Maschinenparameter des Dialogschritts "Pflugausrichtung" können Einstellungen eines Dreipunktlenkers 26, einer hubhöhenabhängigen Sperrung von Seitenstreben und dergleichen mehr sein.

Der Dialog des Pflug-Einstell-Assistenten 7 kann einen Dialogschritt "Vorderfurchenbreite" umfassen, in dem der Bediener B als Maschinenparameter einen Hersteller des Pflugs 3 und/oder Informationen zur Mechanik des Pflugs 3 und/oder einer Verstellbarkeit des Pflugs 3, insbesondere hydraulisch oder mechanisch, und/oder einer Anzahl Scharen 23 des Pflugs 3 eingeben kann. Hier und vorzugsweise ist vorgesehen, dass dem Bediener B als Maschinenparamater im Dialogschritt "Vorderfurchenbreite" optimierte Einstellungen des Pflugs 3 zur Vorderfurchenbreite VB und vorzugsweise Einstellhilfen zur optimierten Einstellung der Vorderfurchenbreite VB des Pflugs 3, insbesondere eine Messmethode und/oder jeweils zu verstellende Stellglieder, vorgegeben werden, die vorzugsweise basierend auf den im Dialogschritt "Vorderfurchenbreite" eingegebenen Maschinenparametern ermittelt wurden. Als zu verstellendes Stellglied bei der Einstellung der Vorderfurchenbreite VB kommt insbesondere eine innere Spindel 28 des Pflugs 3 in Frage. Diese kann ein hydraulischer Zylinder sein, der vorzugsweise von dem Pflug-Einstell-Assistenten 7 automatisch oder vom Bediener B fremdkraftbetätigt eingestellt wird oder eine mechanische Spindel, die vom Bediener B einzustellen ist. Die Vorderfurchenbreite VB ist wie in Fig. 2 a) dargestellt der Abstand zwischen der letzten Furche der gepflügten Bahn neben der aktuell zu pflügenden Bahn und der ersten Furche der aktuellen Bahn.

Der Dialog des Pflug-Einstell-Assistenten 7 kann einen Dialogschritt "Zugpunkteinstellung" umfassen, in dem der Bediener B als Maschinenparameter einen Hersteller des Pflugs 3 und/oder Informationen zur Mechanik des Pflugs 3 und/oder einer Verstellbarkeit des Pflugs 3, insbesondere hydraulisch oder mechanisch, und/oder einer Anzahl Scharen 23 des Pflugs 3 eingeben kann. Vorzugsweise ist es so, dass dem Bediener B im Dialogschritt "Zugpunkteinstellung" eine optimierte Einstellung des Pflugs 3 zur Zugpunkteinstellung und vorzugsweise Einstellhilfen zur optimierten Einstellung des Zugpunkts des Pflugs 3, insbesondere jeweils zu verstellende Stellglieder, vorgegeben werden, die vorzugsweise basierend auf den im Dialogschritt "Zugpunkteinstellung" und/oder im Dialogschritt "Vorderfurchenbreite" eingegebenen und/oder vorgegebenen Maschinenparametern ermittelt wurden.

Die Maschinenparameter des Dialogschritts "Zugpunkteinstellung" werden hier und vorzugsweise so eingestellt, dass die Zugmaschine einen leichten Seitenzug in Richtung des umgepflügten Feldes 6 oder keinen Seitenzug hat. Vorzugsweise werden diese Maschinenparameter automatisch eingestellt.

Sofern der Pflug 3 selbst eine automatische Einstellung der Vorderfurchenbreite VB und/oder des Zugpunktes unterstützt, kann dies von dem Pflug-Einstell-Assistenten 7 berücksichtigt werden.

Der Dialog des Pflug-Einstell-Assistenten 7 kann einen Dialogschritt "Sech" umfassen, in dem dem Bediener B optimierte Maschinenparameter eines Sechs 12 und/oder eines Rundsechs 13, insbesondere eine Sechtiefe und/oder eine Rundsechtiefe, und/oder eines Breitfurchenmessers und/oder eines Untergrundlockerers 14 und/oder ein lateraler Abstand des Rundsechs 13 von der Scharspitze 22, vorgegeben werden. Zusätzlich oder alternativ kann der Bediener B im Dialogschritt "Sech" Maschinenparameter eines Sechs 12 und/oder eines Rundsechs 13, insbesondere eine Sechtiefe und/oder eine Rundsechtiefe, und/oder eines Breitfurchenmessers und/oder eines Untergrundlockerers 14 und/oder einen lateralen Abstand des Rundsechs 13 von der Scharspitze 22, eingeben. Bei dem Untergrundlockerer 14 handelt es sich hier und vorzugsweise um einen Untergrunddorn. Ein Beispiel für einen automatisch einzustellenden Maschinenparameter basierend auf den Maschinenparametern des Dialogschritts "Sech" ist ein Sperren eines Zurücksetzens der Zugmaschine 2, wenn ein Rundsech 13 verwendet wird.

Der Pflug-Einstell-Assistent 7 arbeitet hier und vorzugsweise mittels des Dialogs eine mehrstufige Optimierungsstrategie mit voneinander unterschiedlichen Stufen und Zielvorgaben ab. Die mehrstufige Optimierungsstrategie umfasst hier und vorzugsweise eine erste Stufe "auf dem Hof", in der eine Zielvorgabe die Optimierung einer Grundkonfiguration der Zugmaschine 2 ist, eine zweite Stufe "am Feld", in der eine Zielvorgabe die Optimierung einer pflugspezifischen Konfiguration der Zugmaschine 2 und einer Konfiguration des Pflugs 3 ist und eine dritte Stufe "im Feld", in der eine Zielvorgabe die Anpassung der Grundkonfiguration und der anbaugerätespezifischen Konfiguration während der Bearbeitung des Feldes 3 ist. Hier und vorzugsweise unterscheiden sich die Stufen hinsichtlich des Fortschritts des landwirtschaftlichen Arbeitsprozesses, der durch die durchzuführenden Arbeiten des landwirtschaftlichen Gespanns 1 definiert ist, und/oder durch den Ort, an dem sie abgearbeitet werden.

Diesen Stufen können jeweils unterschiedlichen der Dialogschritte 8 zugeordnet sein. Hier und vorzugsweise sind die Dialogschritte "Bodeneigenschaften" und oder "Ballastierung" und/oder "Bereifung" und/oder "Fahrt" und/oder "Pfluganbauten" der ersten Stufe zugeordnet. Zusätzlich oder alternativ sind die Dialogschritte "Pflügart" und/oder "Vorbereitung" und/oder Pflugausrichtung" und/oder "Vorderfurchenbreite" und/oder "Zugpunkteinstellung" und/oder "Sech" der zweiten Stufe zugeordnet.

Um dem Bediener B in der dritten Stufe während der Bearbeitung des Feldes 6 nicht mittels des Dialogs abzulenken, kann vorgesehen sein, dass in der dritten Stufe eingegebene und/oder vorgegebene Maschinenparameter der Dialogschritte "Bodeneigenschaften" und/oder "Ballastierung" und/oder "Bereifung" und/oder "Pflügart" und/oder "Vorbereitung" und/oder "Pflugausrichtung" und/oder "Vorderfurchenbreite" und/oder "Zugpunkteinstellung" und/oder "Sech" zur Optimierung weiterer Maschinenparameter verwendet werden. Diese Optimierung erfolgt dann vorzugsweise mittels des Fahrerassistenzsystems 4 zumindest teilweise ohne Zutun des Bedieners B.

Es ist hier und vorzugsweise so, dass sich die Stufen hinsichtlich eines Fortschritts des landwirtschaftlichen Arbeitsprozesses unterscheiden. Der Begriff "Fortschritt" bezieht sich dabei auf unterschiedliche Arbeiten des landwirtschaftlichen Gespanns 1 während des landwirtschaftlichen Arbeitsprozesses. Dann ist vorzugsweise die erste Stufe einem Beginn der Abarbeitung des landwirtschaftlichen Arbeitsprozesses zugeordnet und die Zugmaschine 2 in der ersten Stufe noch nicht mit dem Pflug 3 gekoppelt. Zusätzlich oder alternativ ist die zweite Stufe vorzugsweise der Kopplung der Zugmaschine 2 mit dem Pflug 3 zugeordnet. Wieder zusätzlich oder alternativ ist die dritte Stufe vorzugsweise der Verwendung des Pflugs 3 bei der Bearbeitung des Feldes 6 zugeordnet.

Hier und vorzugsweise sind die Stufen jeweils einem Positionsgebiet relativ zu dem Feld 6 zugeordnet. Es ist dann vorzugsweise so, dass die erste Stufe einem Positionsgebiet fern des Feldes 6, vorzugsweise an einem Hof, zugeordnet ist. Zusätzlich oder alternativ ist die zweite Stufe vorzugsweise einem Positionsgebiet am Feld 6 zugeordnet. Wieder zusätzlich oder alternativ kann die dritte Stufe einem Positionsgebiet im Feld 6 zugeordnet sein.

In der bevorzugten Ausführungsform betrifft die erste Stufe die Optimierung der Grundkonfiguration, insbesondere am Hof, zu Beginn der Abarbeitung des landwirtschaftlichen Arbeitsprozesses. So kann der Bediener B noch vor dem Losfahren mit der Zugmaschine 2 diverse Maschinenparameter einstellen. Der Pflug-Einstell-Assistent 7 kann weitere Maschinenparameter auf eine bevorstehende Straßenfahrt und die Tagesplanung abstimmen. Sodann fährt der Bediener B vorzugsweise zum Feld 6. Hierbei kann die Zugmaschine 2 bereits mit dem Pflug 3, jedoch insbesondere diesen nur schleppend, gekoppelt sein.

Die zweite Stufe betrifft vorzugsweise eine Einstellung von Maschinenparametern am Pflug 3 oder eine Kopplung mit dem Pflug 3 und eine Einstellung von Maschinenparametern am Pflug 3. So können in der zweiten Stufe diejenigen Maschinenparameter verstellt werden, die vorher auf eine Straßenfahrt abgestimmt waren. Vorzugsweise fährt der Bediener B mit der Zugmaschine 2 nach Abschluss der Optimierungen der zweiten Stufe in das Feld 6 ein und beginnt mit dessen Bearbeitung.

Der Begriff "Kopplung" bezieht sich hier auf eine zumindest mechanische Verbindung zwischen der Zugmaschine 2 und dem Pflug 4, insbesondere mittels des Dreipunktlenkers 26.

Gemäß einer weiteren Lehre, der eigenständige Bedeutung zukommt, wird ein Fahrerassistenzsystem 4 zur Verwendung in dem vorschlagsgemäßen landwirtschaftlichen Gespann 1 beansprucht. Auf alle Ausführungen zu dem landwirtschaftlichen Gespann 1 darf verwiesen werden. Das Fahrerassistenzsystem 4 umfasst dabei zumindest einen Pflug-Einstell-Automaten 7, der die bereits beschriebenen Funktionen und insbesondere Dialogschritte 8 umfassen kann. Da der Pflug-Einstell-Automaten 7 vorzugsweise ein Software-Programm ist, ist das Fahrerassistenzsystem 4 vorzugsweise zur Ausführung des Pflug-Einstell-Automaten 7 eingerichtet.

### Bezugszeichenliste

- 1: Landwirtschaftliches Gespann
- 2: Zugmaschine
- 3: Pflug
- 4: Fahrerassistenzsystem
- 5: Ein-Ausgabeeinheit
- 6: Feld
- 7: Pflug-Einstell-Assistent
- 8: Dialogschritte
- 9: Hinterachse
- 10: Pfluganbauten
- 11: Düngereinleger
- 12: Sech
- 13: Rundsech
- 14: Untergrundlockerer
- 15: Kompaktierer
- 16: Hydraulische Überlastsicherung
- 17: Vorderachse
- 18: Reifen
- 19: Unterlenker
- 20: Oberlenker
- 21: Schienenwelle
- 22: Scharspitze
- 23: Schar
- 24: Pflugbaum
- 25: Stützrad
- 26: Dreipunktlenker
- 27: Innere Spindel
- B: Bediener
- VB: Vorderfurchenbreite
- AT: Arbeitstiefe
- SB: Spurbreite
- AW: Arbeitsweite

## Patentansprüche

1. Landwirtschaftliches Gespann mit einer Zugmaschine (2), insbesondere einem Traktor, und einem Pflug (3), wobei die Zugmaschine (2) ein Fahrerassistenzsystem (4) aufweist, wobei das Fahrerassistenzsystem (4) eine Ein-Ausgabeeinheit (5) umfasst,
wobei der Pflug (3) und vorzugsweise die Zugmaschine (2) zur Optimierung einer Bearbeitung eines Feldes (6) mit Maschinenparametern einstellbar ist, wobei ein Teil der Maschinenparameter des Pflugs (3) manuell einstellbar und/oder automatisch mittels der Zugmaschine (2) einstellbar ist und
wobei das Fahrerassistenzsystem (4) einen Pflug-Einstell-Assistenten (7) zur Ermittlung und Einstellung optimierter Maschinenparameter des Pflugs (3) und vorzugsweise der Zugmaschine (2) umfasst,
**dadurch gekennzeichnet,**
**dass** der Pflug-Einstell-Assistent (7) in einem Dialog mit einem Bediener (B) in mehreren Dialogschritten (8) jeweils einzustellende optimierte Maschinenparameter des Pflugs (3) und/oder der Zugmaschine (2) ermittelt,
**dass** der Pflug-Einstell-Assistent (7) einen Teil der in einem ersten Dialogschritt ermittelten optimierten Maschinenparameter des Pflugs (3) und/oder der Zugmaschine (2) automatisch einstellt und/oder einen Teil der in dem ersten Dialogschritt ermittelten optimierten Maschinenparameter dem Bediener (B) zur Einstellung am Pflug (3) und/oder der Zugmaschine (2) vorgibt und
**dass** der Pflug-Einstell-Assistent (7) auf Basis der in dem ersten Dialogschritt ermittelten optimierten Maschinenparameter oder auf Basis von vom Bediener (B) in dem ersten Dialogschritt eingegebenen tatsächlich eingestellten Maschinenparametern weitere optimierte Maschinenparameter des Pflugs (3) ermittelt und diese in einem zweiten Dialogschritt dem Bediener (B) zur Einstellung am Pflug (3) vorgibt und/oder automatisch am Pflug (3) einstellt.

2. Landwirtschaftliches Gespann nach Anspruch 1, **dadurch gekennzeichnet, dass** der Pflug-Einstell-Assistent (7) mittels des Dialogs mit dem Bediener (B) in dem ersten Dialogschritt dem Bediener (B) einzustellende optimierte Maschinenparameter zur Einstellung vorgibt.

3. Landwirtschaftliches Gespann nach Anspruch 1 oder 2, **dadurch gekennzeichnet, dass** der Pflug-Einstell-Assistent (7) eine Vorderfurchenbreite (VB) und eine Arbeitstiefe (AT) des Pflugs (3) automatisch am Pflug (3) einstellt und vorzugsweise während der Bearbeitung des Feldes (6) automatisch anpasst.

4. Landwirtschaftliches Gespann nach einem der vorhergehenden Ansprüche, **dadurch gekennzeichnet, dass** der Dialog des Pflug-Einstell-Assistenten (7) einen Dialogschritt "Bodeneigenschaften" umfasst, in dem der Bediener (B) Eigenschaften des Feldes (6) eingibt und/oder in dem Eigenschaften des Feldes (6) automatisch erkannt werden, und/oder, dass der Dialog des Pflug-Einstell-Assistenten (7) einen Dialogschritt "Fahrt" umfasst, in dem der Bediener (B) eine Straßenfahrt und/oder eine Feldbearbeitung als Parameter auswählen kann und der Pflug-Einstell-Assistent (7) straßenfahrtspezifische und/oder feldbearbeitungsspezifische Maschinenparameter automatisch am Pflug (3) einstellt und/oder dem Bediener (B) zur Einstellung vorgibt.

5. Landwirtschaftliches Gespann nach einem der vorhergehenden Ansprüche, **dadurch gekennzeichnet, dass** der Dialog des Pflug-Einstell-Assistenten (7) einen Dialogschritt "Pfluganbauten" umfasst, in dem dem Bediener (B) als Maschinenparameter optimierte Pfluganbauten (10) für den Pflug (3) vorgegeben werden und/oder der Bediener (B) als Maschinenparameter angebaute Pfluganbauten (10) eingeben kann, vorzugsweise, dass in dem Dialogschritt "Pfluganbauten" die optimierten Pfluganbauten (10) für den Pflug (3) auf Basis der in dem Dialogschritt "Bodeneigenschaften" eingegebenen und/oder automatisch erkannten Eigenschaften des Feldes (6) und/oder einem Ziel des Pflügens ermittelt werden.

6. Landwirtschaftliches Gespann nach einem der vorhergehenden Ansprüche, **dadurch gekennzeichnet, dass** der Dialog des Pflug-Einstell-Assistenten (7) einen Dialogschritt "Ballastierung" umfasst, in dem dem Bediener (B) als Maschinenparameter optimierte Ballastierungen für die Vorderachse (17) und/oder die Hinterachse (9) der Zugmaschine (2) vorgegeben werden und/oder der Bediener (B) als Maschinenparameter Ballastierungen für die Vorderachse (17) und/oder die Hinterachse (9) der Zugmaschine (2) und/oder die Nutzung einer Hinterachsenballastierung eingeben kann, vorzugsweise, dass die optimierten Ballastierungen basierend auf der eingegebenen Nutzung der Hinterachsenballastierung und/oder den in dem Dialogschritt "Bodeneigenschaften" eingegebenen und/oder automatisch erkannten Eigenschaften des Feldes (6) ermittelt werden.

7. Landwirtschaftliches Gespann nach einem der vorhergehenden Ansprüche, **dadurch gekennzeichnet, dass** der Dialog des Pflug-Einstell-Assistenten (7) einen Dialogschritt "Bereifung" umfasst, in dem dem Bediener (B) als Maschinenparameter optimierte Reifenparameter, insbesondere ein Reifendruck, vorgegeben werden und/oder der Bediener (B) als Maschinenparameter Reifenparameter, insbesondere einen Reifendruck, eingeben kann, vorzugsweise, dass die optimierten Reifenparameter basierend auf den in dem Dialogschritt "Bodeneigenschaften" eingegebenen und/oder automatisch erkannten Eigenschaften des Feldes (6) und/oder den in dem Dialogschritt "Ballastierung" eingegebenen und/oder vorgegebenen Maschinenparametern ermittelt werden, und/oder, dass die optimierten Maschinenparameter in dem Dialogschritt "Ballastierung" basierend auf den eingegebenen und/oder vorgegebenen Maschinenparametern des Dialogschritts "Bereifung" ermittelt werden.

8. Landwirtschaftliches Gespann nach einem der vorhergehenden Ansprüche, **dadurch gekennzeichnet, dass** der Dialog des Pflug-Einstell-Assistenten (7) einen Dialogschritt "Pflügart" umfasst, in dem der Bediener (B) Parameter des geplanten Pflügens eingeben kann, vorzugsweise, dass die eingebbaren Parameter des geplanten Pflügens umfassen, ob das Pflügen onland oder offland durchgeführt wird und/oder ob ein Kompaktierer (15) verwendet wird und/oder ob eine Saatfurche oder eine Winterfurche gepflügt wird.

9. Landwirtschaftliches Gespann nach einem der vorhergehenden Ansprüche, **dadurch gekennzeichnet, dass** der Dialog des Pflug-Einstell-Assistenten (7) einen Dialogschritt "Vorbereitung" umfasst, in dem dem Bediener (B) als Maschinenparameter ein optimaler Achsabstand vorgegeben wird und/oder der Bediener (B) als Maschinenparameter einen Achsabstand eingeben kann und/oder dem Bediener (B) als Maschinenparameter optimierte Einstellungen für Unterlenker (19) und/oder für Oberlenker (20) vorgegeben werden und/oder der Bediener (B) als Maschinenparameter Einstellungen der Unterlenker (19) und/oder der Oberlenker (20) eingeben kann, und/oder, in dem die Unterlenker (19) und/oder die Oberlenker (20) von dem Pflug-Einstell-Assistenten (7) automatisch oder teil-automatisch auf die in dem Dialogschritt "Vorbereitung" ermittelten optimierten Maschinenparameter eingestellt werden, vorzugsweise, dass die optimierten Maschinenparameter des Dialogschritts "Vorbereitung" basierend auf den eingegebenen Parametern des Dialogschritts "Pflügart" ermittelt werden.

10. Landwirtschaftliches Gespann nach einem der vorhergehenden Ansprüche, **dadurch gekennzeichnet, dass** der Pflug-Einstell-Assistent (7) einen Dialogschritt "Pflugausrichtung" umfasst, in dem dem Bediener (B) als Maschinenparameter eine optimierte Arbeitstiefe (AT) und/oder eine optimierte Arbeitsweite (AW) vorgegeben wird und/oder in dem der Bediener (B) als Maschinenparameter eine Arbeitstiefe (AT) und/oder eine Arbeitsweite (AW) eingeben kann, vorzugsweise dass in dem Dialogschritt "Pflugausrichtung" dem Bediener (B) als Maschinenparameter optimierte Einstellungen des Pflugs (3), insbesondere ein Neigungswinkel des Pflugs (3) und ein Anlenkpunkt für die Oberlenker, vorgegeben werden, weiter vorzugsweise, dass in dem Dialogschritt "Pflugausrichtung" Einstellhilfen zur optimierten Einstellung der Einstellungen des Pflugs (3), insbesondere jeweils zu verstellende Stellglieder, vorgegeben werden, die vorzugsweise basierend auf den im Dialogschritt "Pflugausrichtung" eingegebenen und/oder vorgegebenen Maschinenparametern ermittelt wurden.

11. Landwirtschaftliches Gespann nach einem der vorhergehenden Ansprüche, **dadurch gekennzeichnet, dass** der Dialog des Pflug-Einstell-Assistenten (7) einen Dialogschritt "Vorderfurchenbreite" umfasst, in dem der Bediener (B) als Maschinenparameter einen Hersteller des Pflugs (3) und/oder Informationen zur Mechanik des Pflugs (3) und/oder einer Verstellbarkeit des Pflugs (3), insbesondere hydraulisch oder mechanisch, und/oder einer Anzahl Scharen (23) des Pflugs (3) eingeben kann, und/oder, dass dem Bediener (B) optimierte Maschinenparameter des Pflugs (3) zur Vorderfurchenbreite (VB) und vorzugsweise Einstellhilfen zur optimierten Einstellung der Vorderfurchenbreite (VB) des Pflugs (3), insbesondere eine Messmethode und/oder jeweils zu verstellende Stellglieder, vorgegeben werden, die vorzugsweise basierend auf den im Dialogschritt "Vorderfurchenbreite" eingegebenen Maschinenparametern ermittelt wurden.

12. Landwirtschaftliches Gespann nach einem der vorhergehenden Ansprüche, **dadurch gekennzeichnet, dass** der Dialog des Pflug-Einstell-Assistenten (7) einen Dialogschritt "Zugpunkteinstellung" umfasst, in dem der Bediener (B) als Maschinenparameter einen Hersteller des Pflugs (3) und/oder Informationen zur Mechanik des Pflugs (3) und/oder einer Verstellbarkeit des Pflugs (3), insbesondere hydraulisch oder mechanisch, und/oder einer Anzahl Scharen (23) des Pflugs (3) eingeben kann, vorzugsweise, dass dem Bediener (B) optimierte Einstellungen des Pflugs (3) zur Zugpunkteinstellung und vorzugsweise Einstellhilfen zur optimierten Einstellung des Zugpunkts des Pflugs (3), insbesondere jeweils zu verstellende Stellglieder, vorgegeben werden, die vorzugsweise basierend auf den im Dialogschritt "Zugpunkteinstellung" und/oder im Dialogschritt "Vorderfurchenbreite" eingegebenen und/oder vorgegebenen Maschinenparametern ermittelt wurden.

13. Landwirtschaftliches Gespann nach einem der vorhergehenden Ansprüche, **dadurch gekennzeichnet, dass** der Dialog des Pflug-Einstell-Assistenten (7) einen Dialogschritt "Sech" umfasst, in dem dem Bediener (B) optimierte Maschinenparameter eines Sechs (12) und/oder eines Rundsechs (13), insbesondere eine Sechtiefe und/oder eine Rundsechtiefe, und/oder eines Breitfurchenmessers und/oder eines Untergrundlockerers (14) und/oder ein lateraler Abstand des Rundsechs (13) von der Scharspitze (22) vorgegeben werden, und/oder, in dem der Bediener (B) Maschinenparameter eines Sechs (12) und/oder eines Rundsechs (13), insbesondere eine Sechtiefe und/oder eine Rundsechtiefe, und/oder eines Breitfurchenmessers und/oder eines Untergrundlockerers (14) und/oder einen lateralen Abstand des Rundsechs (13) von der Scharspitze (22) eingeben kann.

14. Landwirtschaftliches Gespann nach einem der vorhergehenden Ansprüche, **dadurch gekennzeichnet, dass** der Pflug-Einstell-Assistent (7) mittels des Dialogs eine mehrstufige Optimierungsstrategie mit voneinander unterschiedlichen Stufen und Zielvorgaben abarbeitet,
dass die mehrstufige Optimierungsstrategie eine erste Stufe "auf dem Hof" umfasst, in der eine Zielvorgabe die Optimierung einer Grundkonfiguration der Zugmaschine (2) ist, dass die mehrstufige Optimierungsstrategie eine zweite Stufe "am Feld" umfasst, in der eine Zielvorgabe die Optimierung einer pflugspezifischen Konfiguration der Zugmaschine (2) und einer Konfiguration des Pflugs (3) ist und dass die mehrstufige Optimierungsstrategie eine dritte Stufe "im Feld" umfasst, in der eine Zielvorgabe die Anpassung der Grundkonfiguration und der anbaugerätespezifischen Konfiguration während der Bearbeitung des Feldes (6) ist.

15. Landwirtschaftliches Gespann nach Anspruch 14, **dadurch gekennzeichnet, dass** die Dialogschritte "Bodeneigenschaften" und/oder "Ballastierung" und/oder "Bereifung" und/oder "Fahrt" und/oder "Pfluganbauten" der ersten Stufe zugeordnet sind, und/oder, dass die Dialogschritte "Pflügart" und/oder "Vorbereitung" und/oder "Pflugausrichtung" und/oder "Vorderfurchenbreite" und/oder "Zugpunkteinstellung" und/oder "Sech" der zweiten Stufe zugeordnet sind, und/oder, dass in der dritten Stufe eingegebene oder vorgegebene Maschinenparameter der Dialogschritte "Bodeneigenschaften" und/oder "Ballastierung" und/oder "Bereifung" und/oder "Pflügart" und/oder "Vorbereitung" und/oder "Pflugausrichtung" und/oder "Vorderfurchenbreite" und/oder "Zugpunkteinstellung" und/oder "Sech" zur Optimierung weiterer Maschinenparameter verwendet werden.

16. Fahrerassistenzsystem mit einem Pflug-Einstell-Assistenten (7) zur Verwendung in einem landwirtschaftlichen Gespann (1) nach einem der vorhergehenden Ansprüche.

## Claims

1. An agricultural vehicle and trailer combination with a towing machine (2), in particular a tractor, and a plough (3), wherein the towing machine (2) has a driver assistance system (4), wherein the driver assistance system (4) comprises an input/output unit (5),
wherein the plough (3) and preferably the towing machine (2) can be set with machine parameters in order to optimize processing of a field (6), wherein a portion of the machine parameters of the plough (3) can be set manually and/or can be set automatically by means of the towing machine (2), and
wherein the driver assistance system (4) comprises a plough setting assistant (7) in order to determine and set optimized machine parameters of the plough (3) and preferably of the towing machine (2),
**characterized in that**
in a plurality of dialogue steps (8) in a dialogue with an operator (B), the plough setting assistant (7) determines optimized machine parameters of the plough (3) and/or of the towing machine (2) to be respectively set,
**in that** the plough setting assistant (7) automatically sets a portion of the optimized machine parameters of the plough (3) and/or of the towing machine (2) determined in a first dialogue step and/or specifies a portion of the optimized machine parameters determined in the first dialogue step to the operator (B) for setting the plough (3) and/or the towing machine (2), and
**in that**, on the basis of the optimized machine parameters determined in the first dialogue step or on the basis of actually set machine parameters input by the operator (B) in the first dialogue step, the plough setting assistant (7) determines further optimized machine parameters of the plough (3) and, in a second dialogue step, specifies them to the operator (B) for setting the plough (3) and/or automatically sets the plough (3).

2. The agricultural vehicle and trailer combination according to claim 1, **characterized in that** for setting, the plough setting assistant (7) specifies optimized machine parameters to be set to the operator (B) by means of the dialogue with the operator (B) in the first dialogue step.

3. The agricultural vehicle and trailer combination according to claim 1 or claim 2, **characterized in that** the plough setting assistant (7) automatically sets a front furrow width (VB) and a working depth (AT) of the plough (3) on the plough (3) and preferably automatically adapts them during processing of the field (6).

4. The agricultural vehicle and trailer combination according to one of the preceding claims, **characterized in that** the dialogue of the plough setting assistant (7) comprises a "Soil characteristics" dialogue step, in which the operator (b) inputs characteristics of the field (6) and/or in which characteristics of the field (6) are automatically detected, and/or **in that** the dialogue of the plough setting assistant (7) comprises a "Travel" dialogue step, in which the operator (B) can select road travel and/or field processing as parameters and the plough setting assistant (7) automatically sets road travel-specific and/or field processing-specific machine parameters on the plough (3) and/or specifies them to the operator (B) for setting.

5. The agricultural vehicle and trailer combination according to one of the preceding claims, **characterized in that** the dialogue of the plough setting assistant (7) comprises a "Plough attachments" dialogue step, in which optimized plough attachments (10) for the plough (3) are specified to the operator (B) as machine parameters and/or the operator (B) can input attached plough attachments (10) as machine parameters, preferably **in that** in the "Plough attachments" dialogue step, the optimized plough attachments (10) for the plough (3) are determined on the basis of the characteristics of the field (6) and/or a ploughing target input and/or automatically detected in the "Soil characteristics" dialogue step.

6. The agricultural vehicle and trailer combination according to one of the preceding claims, **characterized in that** the dialogue of the plough setting assistant (7) comprises a "Ballast" dialogue step, in which optimized ballasts for the front axle (17) and/or the rear axle (9) of the towing machine (2) are specified to the operator (B) as machine parameters and/or the operator (B) can input ballasts for the front axle (17) and/or the rear axle (9) of the towing machine (2) and/or the usage of a rear axle ballast as machine parameters, preferably **in that** the optimized ballasts are determined on the basis of the input usage of the rear axle ballast and/or the characteristics of the field (6) input and/or automatically detected in the "Soil characteristics" dialogue step.

7. The agricultural vehicle and trailer combination according to one of the preceding claims, **characterized in that** the dialogue of the plough setting assistant (7) comprises a "Tyres" dialogue step, in which optimized tyre parameters, in particular a tyre pressure, are specified to the operator (B) as machine parameters and/or the operator (B) can input tyre parameters, in particular a tyre pressure, as machine parameters, preferably **in that** the optimized tyre parameters are determined on the basis of the characteristics of the field (6) input and/or automatically detected in the "Soil characteristics" dialogue step and/or the machine parameters input and/or specified in the "Ballast" dialogue step, and/or **in that** in the "Ballast" dialogue step, the optimized machine parameters are determined on the basis of the input and/or specified machine parameters of the "Tyres" dialogue step.

8. The agricultural vehicle and trailer combination according to one of the preceding claims, **characterized in that** the dialogue of the plough setting assistant (7) comprises a "Plough type" dialogue step, in which the operator (B) can input parameters of the envisaged ploughing, preferably **in that** the parameters of the envisaged ploughing that can be input comprise whether the ploughing will be carried out onland or offland and/or whether a compactor (15) is used and/or whether a seed furrow or a winter furrow is ploughed.

9. The agricultural vehicle and trailer combination according to one of the preceding claims, **characterized in that** the dialogue of the plough setting assistant (7) comprises a "Preparation" dialogue step, in which an optimal axle separation is specified to the operator (B) as machine parameters and/or the operator (B) can input an axle separation as machine parameters and/or optimized settings for lower links (19) and/or for upper links (20) can be specified to the operator (B) as machine parameters and/or the operator (B) can input settings of the lower links (19) and/or of the upper links (20) as machine parameters, and/or in which the lower links (19) and/or the upper links (20) are automatically or semi-automatically set by the plough setting assistant (7) to the optimized machine parameters determined in the "Preparation" dialogue step, preferably **in that** the optimized machine parameters of the "Preparation" dialogue step are determined on the basis of the input parameters of the "Plough type" dialogue step.

10. The agricultural vehicle and trailer combination according to one of the preceding claims, **characterized in that** the plough setting assistant (7) comprises a "Plough orientation" dialogue step, in which an optimized working depth (AT) and/or an optimized working width (AW) is specified to the operator (B) as machine parameters and/or in which the operator (B) can input a working depth (AT) and/or a working width (AW) as machine parameters, preferably **in that** in the "Plough orientation" dialogue step, optimized settings of the plough (3), in particular an angle of inclination of the plough (3) and an articulation point for the upper link, are specified to the operator (B) as machine parameters, more preferably **in that** in the "Plough orientation" dialogue step, setting aids are specified in order to optimize setting of the settings of the plough (3), in particular respective actuators to be actuated, which have preferably been determined on the basis of the machine parameters input and/or specified in the "Plough orientation" dialogue step.

11. The agricultural vehicle and trailer combination according to one of the preceding claims, **characterized in that** the dialogue of the plough setting assistant (7) comprises a "Front furrow width" dialogue step, in which the operator (B) can input, as machine parameters, a manufacturer of the plough (3) and/or information regarding the mechanics of the plough (3) and/or an adjustability of the plough (3), in particular hydraulic or mechanical, and/or a number of shares (23) for the plough (3), and/or **in that** optimized machine parameters of the plough (3) in respect of the front furrow width (VB) and preferably setting aids for the optimized setting of the front furrow width (VB) of the plough (3), in particular a measurement method and/or respective actuators to be actuated, are specified to the operator (B), the machine parameters preferably having been determined on the basis of the machine parameters input in the "Front furrow width" dialogue step.

12. The agricultural vehicle and trailer combination according to one of the preceding claims, **characterized in that** the dialogue of the plough setting assistant (7) comprises a "Pull point setting" dialogue step, in which the operator (B) can input, as machine parameters, a manufacturer of the plough (3) and/or information regarding the mechanics of the plough (3) and/or an adjustability of the plough (3), in particular hydraulic or mechanical, and/or a number of shares (23) for the plough (3), preferably **in that** optimized settings of the plough (3) in order to set the pull point and preferably setting aids for the optimized setting of the pull point of the plough (3), in particular respective actuators to be actuated, are specified to the operator (B), the settings preferably having been determined on the basis of the machine parameters input and/or specified in the "Pull point setting" dialogue step and/or in the "Front furrow width" dialogue step.

13. The agricultural vehicle and trailer combination according to one of the preceding claims, **characterized in that** the dialogue of the plough setting assistant (7) comprises a "Coulter" dialogue step, in which optimized machine parameters for a coulter (12) and/or for a disk coulter (13), in particular a coulter depth and/or a disk coulter depth, and/or for a wide furrow cutter and/or for a subsoiler (14) and/or a lateral spacing of the disk coulter (13) from the share tip (22), are specified to the operator (B), and/or in which the operator (B) can input machine parameters for a coulter (12) and/or for a disk coulter (13), in particular a coulter depth and/or a disk coulter depth, and/or for a wide furrow cutter and/or for a subsoiler (14) and/or a lateral spacing of the disk coulter (13) from the share tip (22).

14. The agricultural vehicle and trailer combination according to one of the preceding claims, **characterized in that** the plough setting assistant (7) executes a multi-stage optimization strategy with mutually different stages and target specifications by means of the dialogue,
**in that** the multi-stage optimization strategy comprises a first "On the yard" stage, in which a target specification is the optimization of a basic configuration of the towing machine (2), **in that** the multi-stage optimization strategy comprises a second "At the field" stage, in which a target specification is the optimization of a plough-specific configuration of the towing machine (2) and a configuration of the plough (3) and **in that** the multi-step optimization strategy comprises a third "In the field" stage, in which a target specification is the adaptation of the basic configuration and of the attachment-specific configuration during the processing of the field (6).

15. The agricultural vehicle and trailer combination according to claim 14, **characterized in that** the dialogue steps "Soil characteristics" and/or "Ballast" and/or "Tyres" and/or "Travel" and/or "Plough attachments" are allocated to the first stage, and/or **in that** the dialogue steps "Plough type" and/or "Preparation" and/or "Plough orientation" and/or "Front furrow width" and/or "Pull point setting" and/or "Coulter" are allocated to the second stage, and/or **in that** in the third stage, input or specified machine parameters of the dialogue steps "Soil characteristics" and/or "Ballast" and/or "Tyres" and/or "Plough type" and/or "Preparation" and/or "Plough orientation" and/or "Front furrow width" and/or "Pull point setting" and/or "Coulter" are used for the optimization of other machine parameters.

16. A driver assistance system with a plough setting assistant (7) for use in an agricultural vehicle and trailer combination (1) according to one of the preceding claims.

## Revendications

1. Attelage agricole comprenant un engin de traction (2), notamment un tracteur, et une charrue (3), l'engin de traction (2) présentant un système d'assistance au conducteur (4), ledit système d'assistance au conducteur (4) comportant une unité d'entrée-sortie (5),
la charrue (3) et de préférence l'engin de traction (2) pouvant être réglés avec des paramètres machine en vue de l'optimisation d'un traitement d'un champ (6), une partie des paramètres machine de la charrue (3) pouvant être réglée manuellement et/ou de façon automatique à l'aide de l'engin de traction (2), et
le système d'assistance au conducteur (4) comprenant un assistant de réglage de charrue (7) destiné à déterminer et régler des paramètres machine optimisés de la charrue (3) et de préférence de l'engin de traction (2),
**caractérisé en ce que**
l'assistant de réglage de charrue (7), dans un dialogue avec un opérateur (B), détermine en plusieurs étapes de dialogue (8) des paramètres machine optimisés de la charrue (3) et/ou l'engin de traction (2), devant respectivement être réglés,
**en ce que** l'assistant de réglage de charrue (7) règle automatiquement une partie des paramètres machine optimisés de la charrue (3) et/ou de l'engin de traction (2), déterminés dans une première étape de dialogue, et/ou prédéfinit pour l'opérateur (B) une partie des paramètres machine optimisés, déterminés dans la première étape de dialogue, en vue du réglage sur la charrue (3) et/ou l'engin de traction (2), et
**en ce que**, sur la base des paramètres machine optimisés, déterminés dans la première étape de dialogue, ou sur la base de paramètres machine effectivement réglés, saisis par l'opérateur (B) au cours de la première étape de dialogue, l'assistant de réglage de charrue (7) détermine des paramètres machine optimisés supplémentaires de la charrue (3) et les prédéfinit pour l'opérateur (B) lors d'une deuxième étape de dialogue, en vue du réglage sur la charrue (3), et/ou les règle automatiquement sur la charrue (3).

2. Attelage agricole selon la revendication 1, **caractérisé en ce que** l'assistant de réglage de charrue (7), par le biais du dialogue avec l'opérateur (B) au cours de la première étape de dialogue, prédéfinit pour l'opérateur (B) des paramètres machine optimisés à régler, en vue du réglage.

3. Attelage agricole selon la revendication 1 ou 2, **caractérisé en ce que** l'assistant de réglage de charrue (7) règle automatiquement sur la charrue (3) une largeur de sillon avant (VB) et une profondeur de travail (AT) de la charrue (3) et les adapte de préférence de manière automatique pendant le traitement du champ (6).

4. Attelage agricole selon une des revendications précédentes, **caractérisé en ce que** le dialogue de l'assistant de réglage de charrue (7) comprend une étape de dialogue « propriétés du sol » dans laquelle l'opérateur (B) saisit des propriétés du champ (6) et/ou dans laquelle des propriétés du champ (6) sont détectées de manière automatique, et/ou **en ce que** le dialogue de l'assistant de réglage de charrue (7) comprend une étape de dialogue « déplacement » dans laquelle l'opérateur (B) peut sélectionner en tant que paramètre un déplacement sur route et/ou un traitement de champ, et l'assistant de réglage de charrue (7) règle automatiquement sur la charrue (3) des paramètres machine spécifiques au déplacement sur route et/ou spécifiques au traitement de champ et/ou les prédéfinit pour l'opérateur (B) en vue du réglage.

5. Attelage agricole selon une des revendications précédentes, **caractérisé en ce que** le dialogue de l'assistant de réglage de charrue (7) comprend une étape de dialogue « outils montés sur la charrue » dans laquelle des outils montés sur la charrue (10) optimisés pour la charrue (3) sont prédéfinis pour l'opérateur (B) en tant que paramètres machine et/ou l'opérateur (B) peut saisir des outils montés sur la charrue (10) en tant que paramètres machine, de préférence **en ce que** dans l'étape de dialogue « outils montés sur la charrue », les outils montés sur la charrue (10) optimisés pour la charrue (3) sont déterminés sur la base des propriétés du champ (6) saisies au cours de l'étape de dialogue « propriétés du sol » et/ou détectées de manière automatique et/ou sur la base d'un objectif du labour.

6. Attelage agricole selon une des revendications précédentes, **caractérisé en ce que** le dialogue de l'assistant de réglage de charrue (7) comprend une étape de dialogue « lestage » dans laquelle des lestages optimisés pour l'essieu avant (17) et/ou l'essieu arrière (9) de l'engin de traction (2) sont prédéfinis pour l'opérateur (B) en tant que paramètres machine et/ou l'opérateur (B) peut saisir en tant que paramètres machine, des lestages pour l'essieu avant (17) et/ou l'essieu arrière (9) de l'engin de traction (2) et/ou l'utilisation d'un lestage d'essieu arrière, de préférence **en ce que** les lestages optimisés sont déterminés sur la base de l'utilisation saisie du lestage d'essieu arrière et/ou des propriétés du champ (6) saisies à l'étape de dialogue « propriétés du sol » et/ou détectées de manière automatique.

7. Attelage agricole selon une des revendications précédentes, **caractérisé en ce que** le dialogue de l'assistant de réglage de charrue (7) comprend une étape de dialogue « pneumatiques » dans laquelle des paramètres de pneus optimisés, notamment une pression de pneus, sont prédéfinis pour l'opérateur (B) en tant que paramètres machine, et/ou l'opérateur (B) peut saisir en tant que paramètres machine, des paramètres de pneus, notamment une pression de pneus, de préférence **en ce que** les paramètres de pneus optimisés sont déterminés sur la base des propriétés du champ (6) saisies au cours de l'étape de dialogue « propriétés du sol » et/ou détectées de manière automatique, et/ou sur la base des paramètres machine saisis et/ou prédéfinis au cours de l'étape de dialogue « lestage », et/ou **en ce que** les paramètres machine optimisés sont déterminés à l'étape de dialogue « lestage », sur la base des paramètres machine saisis et/ou prédéfinis de l'étape de dialogue « pneumatiques ».

8. Attelage agricole selon une des revendications précédentes, **caractérisé en ce que** le dialogue de l'assistant de réglage de charrue (7) comprend une étape de dialogue « mode de labour » dans laquelle l'opérateur (B) peut saisir des paramètres de l'opération de labour prévue, de préférence **en ce que** les paramètres du labour prévu qui peuvent être saisis incluent le fait de savoir si le labour est réalisé hors raie ou dans la raie et/ou si un compacteur (15) est utilisé et/ou si un sillon de semis ou un sillon d'hiver est labouré.

9. Attelage agricole selon une des revendications précédentes, **caractérisé en ce que** le dialogue de l'assistant de réglage de charrue (7) comprend une étape de dialogue « préparation » dans laquelle un empattement optimal est prédéfini en tant que paramètre machine pour l'opérateur (B), et/ou l'opérateur (B) peut saisir un empattement en tant que paramètre machine, et/ou des réglages optimisés pour les bras inférieurs (19) et/ou pour les bras supérieurs (20) sont prédéfinis en tant que paramètres machines pour l'opérateur (B), et/ou l'opérateur (B) peut saisir en tant que paramètres machine, des réglages des bras inférieurs (19) et/ou des bras supérieurs (20), et/ou dans laquelle les bras inférieurs (19) et/ou les bras supérieurs (20) sont réglés de manière automatique ou semi-automatique par l'assistant de réglage de charrue (7) aux paramètres machine optimisés déterminés au cours de l'étape de dialogue « préparation », de préférence **en ce que** les paramètres machine optimisés de l'étape de dialogue « préparation » sont déterminés sur la base des paramètres saisis de l'étape de dialogue « mode de labour ».

10. Attelage agricole selon une des revendications précédentes, **caractérisé en ce que** l'assistant de réglage de charrue (7) comprend une étape de dialogue « orientation de charrue » dans laquelle une profondeur de travail (AT) optimisée et/ou une largeur de travail (AW) optimisée sont prédéfinies en tant que paramètres machine pour l'opérateur (B), et/ou dans laquelle l'opérateur (B) peut saisir une profondeur de travail (AT) et/ou une largeur de travail (AW) en tant paramètres machine, de préférence **en ce que** dans l'étape de dialogue « orientation de charrue », des réglages optimisés de la charrue (3), notamment un angle d'inclinaison de la charrue (3) et un point d'articulation pour le bras supérieur, sont prédéfinis en tant que paramètres machine pour l'opérateur (B), en outre de préférence que dans l'étape de dialogue « orientation de charrue », des aides au réglage en vue de l'ajustement optimisé des réglages de la charrue (3), notamment des actionneurs respectifs à régler, sont prédéfinies, aides qui ont de préférence été déterminées sur la base des paramètres machine saisis dans l'étape de dialogue « orientation de charrue » et/ou prédéfinies.

11. Attelage agricole selon une des revendications précédentes, **caractérisé en ce que** le dialogue de l'assistant de réglage de charrue (7) comprend une étape de dialogue « largeur de sillon avant » dans laquelle l'opérateur (B) peut saisir, en tant que paramètres machine, un fabricant de la charrue (3) et/ou des informations relatives à la mécanique de la charrue (3) et/ou une possibilité de réglage de la charrue (3), notamment sur le plan hydraulique ou mécanique, et/ou un nombre de socs (23) de la charrue (3), et/ou **en ce que** des paramètres machine optimisés de la charrue (3) concernant la largeur de sillon avant (VB) et, de préférence, des aides au réglage en vue du réglage de la largeur de sillon avant (VB) de la charrue, notamment une méthode de mesure et/ou des actionneurs respectifs à régler, sont prédéfinis pour l'opérateur (B), et ont de préférence été déterminés sur la base des paramètres machine saisis à l'étape de dialogue « largeur de sillon avant ».

12. Attelage agricole selon une des revendications précédentes, **caractérisé en ce que** le dialogue de l'assistant de réglage de charrue (7) comprend une étape de dialogue « réglage de point de traction » dans laquelle l'opérateur (B) peut saisir, en tant que paramètres machine, un fabricant de la charrue (3) et/ou des informations relatives à la mécanique de la charrue (3) et/ou à une possibilité de réglage de la charrue (3), notamment sur le plan hydraulique ou mécanique, et/ou un nombre de socs (23) de la charrue (3), de préférence **en ce que** des réglages optimisés de la charrue (3), en vue du réglage du point de traction, et de préférence des aides au réglage, en vue du réglage optimisé du point de traction de la charrue (3), notamment des actionneurs respectifs à régler, sont prédéfinis pour l'opérateur (B) et sont déterminés de préférence sur la base des paramètres machine saisis et/ou prédéfinis à l'étape de dialogue « réglage du point de traction » et/ou à l'étape de dialogue « largeur de sillon avant ».

13. Attelage agricole selon une des revendications précédentes, **caractérisé en ce que** le dialogue de l'assistant de réglage de charrue (7) comprend une étape de dialogue « coutre » dans laquelle des paramètres machine optimisés d'un coutre (12) et/ou d'un coutre circulaire (13), notamment une profondeur de coutre et/ou une profondeur de coutre circulaire, et/ou d'une lame à sillon large et/ou d'une sous-soleuse (14) et/ou une distance latérale du coutre circulaire (13) par rapport à la pointe de soc (22), sont prédéfinis pour l'opérateur (B), et/ou dans laquelle l'opérateur (B) peut saisir des paramètres machine d'un coutre (12) et/ou d'un coutre circulaire (13), notamment une profondeur de coutre et/ou une profondeur de coutre circulaire, et/ou d'une lame à sillon large et/ou d'une sous-soleuse (14) et/ou une distance latérale du coutre circulaire (13) par rapport à la pointe de soc (22)/

14. Attelage agricole selon une des revendications précédentes, **caractérisé en ce que** l'assistant de réglage de charrue (7) exécute, par le biais du dialogue, une stratégie d'optimisation à plusieurs niveaux, avec des niveaux et des objectifs différents les uns des autres,
**en ce que** la stratégie d'optimisation à plusieurs niveaux comprend un premier niveau « à la ferme », où un objectif est l'optimisation d'une configuration de base de l'engin de traction (2), **en ce que** la stratégie d'optimisation à plusieurs niveaux comprend un deuxième niveau « aux abords du champ », où un objectif est l'optimisation d'une configuration spécifique à la charrue de l'engin de traction (2) et d'une configuration de la charrue (3), et **en ce que** la stratégie d'optimisation à plusieurs niveaux comprend un troisième niveau « dans le champ », où un objectif est l'adaptation de la configuration de base et de la configuration spécifique à l'outil rapporté pendant le traitement du champ.

15. Attelage agricole selon la revendication 14, **caractérisé en ce que** les étapes de dialogue « propriétés du sol » et/ou « lestage » et/ou « pneumatiques » et/ou « déplacement » et/ou « outils rapportés sur la charrue » sont associées au premier niveau, et/ou **en ce que** les étapes de dialogue « mode de labour » et/ou « préparation » et/ou « orientation de la charrue » et/ou « largeur de sillon avant » et/ou « réglage du point de traction » et/ou « coutre » sont associées au deuxième niveau, et **en ce qu'**au troisième niveau, des paramètres machine saisis ou prédéfinis des étapes de dialogue, « propriétés du sol » et/ou « lestage » et/ou « pneumatiques » et/ou « mode de labour » et/ou « préparation » et/ou « orientation de la charrue » et/ou « largeur de sillon avant » et/ou « réglage du point de traction » et/ou « coutre » sont utilisés pour l'optimisation de paramètres machine supplémentaires.

16. Système d'assistance au conducteur comprenant un assistant de réglage de charrue (7) destiné à une utilisation dans un attelage agricole (1) selon une des revendications précédentes.
